(19) Europäisches Patentamt
European Patent Office
Office européen des brevets

(11) **EP 2 861 423 B1**

(12) **FASCICULE DE BREVET EUROPEEN**

(45) Date de publication et mention de la délivrance du brevet:
**07.08.2019 Bulletin 2019/32**

(21) Numéro de dépôt: **13731059.5**

(22) Date de dépôt: **12.06.2013**

(51) Int Cl.:
***B32B 17/10*** *(2006.01)*        ***B62D 25/06*** *(2006.01)*
*B60J 1/00* *(2006.01)*

(86) Numéro de dépôt international:
**PCT/EP2013/062116**

(87) Numéro de publication internationale:
**WO 2013/189798 (27.12.2013 Gazette 2013/52)**

(54) **TOIT DE VÉHICULE**

FAHRZEUGDACH

VEHICLE ROOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2012  BE 201200412**

(43) Date de publication de la demande:
**22.04.2015   Bulletin 2015/17**

(73) Titulaire: **AGC Glass Europe**
**1348 Louvain-La-Neuve (BE)**

(72) Inventeurs:
• **LEGRAND, Denis**
**F-59144 Wargnies Le Grand (FR)**

• **MEYERS, Michel**
**B-1310 La Hulpe (BE)**

(74) Mandataire: **Chabou, Samia**
**AGC Glass Europe**
**Technovation Centre**
**IP Department**
**Rue Louis Blériot, 12**
**6041 Gosselies (BE)**

(56) Documents cités:
**WO-A1-2011/033313      US-A1- 2004 124 665**
**US-A1- 2009 176 101      US-A1- 2010 165 436**

**EP 2 861 423 B1**

## Description

L'invention concerne les toits de véhicules constitués pour partie au moins d'un vitrage. De manière plus précise l'invention concerne les toits dont le vitrage recouvre une part importante de leur surface, voire la totalité de celle-ci.

Les toits vitrés se substituent pour une part croissante aux toits traditionnels qui sont partie de la carrosserie des véhicules. Le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela les toits vitrés doivent satisfaire à de nombreuses exigences. Il convient tout d'abord de répondre aux obligations de sécurité. Les toits vitrés doivent satisfaire aux règlements qui imposent une résistance à l'éviction en cas d'accident. Dans ce sens ils doivent satisfaire aux règles désignées « R43 ». La résistance à l'éviction des passagers nécessite notamment le recours à des vitrages feuilletés.

La présence de vitrages feuilletés n'exclut pas la nécessité de limiter le poids. Pour cette raison les toits feuilletés utilisés doivent aussi présenter des épaisseurs bien maîtrisées. En pratique les vitrages de ces toits ont une épaisseur qui n'est pas supérieure à 8mm et de préférence pas supérieure à 7,5mm.

Le choix de toits vitrés, comme précisé ci-dessus, a pour but le gain de luminosité dans l'habitacle. Ce gain ne doit pas être contraire à d'autres propriétés qui assurent le confort des passagers, en particulier le confort thermique. La présence de toits vitrés, motivée par l'augmentation de la luminosité, conduit aussi à l'accroissement des transferts thermiques avec l'extérieur. Ceci est sensible dans le mécanisme d'effet de serre lorsque le véhicule est exposé à un rayonnement solaire intense. Mais le toit doit aussi contribuer au maintien de la température de l'habitacle en période froide.

Le contrôle des conditions thermiques conduit à diverses mesures dont l'utilisation de vitrages à forte sélectivité. Ces conditions résultent du choix des verres utilisés (le plus souvent minéraux, mais qui peuvent aussi être organiques). Elles sont aussi le fait des filtres additionnels que comportent ces vitrages, notamment ceux constitués par des systèmes de couches réfléchissant sélectivement les infrarouges. L'art antérieur fait état de solutions répondant à ces exigences. C'est le cas en particulier du brevet EP1200256.

Le choix de toits vitrés a permis aussi de développer des fonctionnalités supplémentaires, par exemple l'intégration de systèmes photovoltaïques qui contribuent à la production électrique nécessaire au fonctionnement des divers organes des véhicules. La mise en oeuvre de tels systèmes fait l'objet de nombreuses publications, et notamment du brevet EP1171294.

Par ailleurs le souhait d'un accroissement de luminosité dans l'habitacle n'est pas nécessairement permanent. L'utilisateur peut, selon le moment d'utilisation, préférer une luminosité moindre, ou simplement maintenir le caractère «privatif» qui isole l'habitacle des regards extérieurs.

Pour modifier la transmission lumineuse des vitrages en fonction des conditions d'utilisation, des solutions sont proposées antérieurement. Il s'agit notamment des vitrages dits « électro-commandés », tels que les vitrages comportant des moyens électro-chromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices»).

Le développement des toits vitrés soulève d'autres questions et ouvre la voie à de nouvelles réalisations. Certaines fonctions peuvent, ou doivent être modifiées compte tenu des spécificités de ces toits. Un but de l'invention est de rendre l'utilisation des toits vitrés comportant les fonctionnalités indiquées ci-dessus mieux à même de répondre aux souhaits des constructeurs dans leurs performances et dans la simplification de leur utilisation.

Si la transmission lumineuse des toits vitrés est systématiquement réduite, d'une part pour garder un caractère qualifié de «privatif», et d'autre part pour limiter l'apport énergétique qui est indissociable des longueurs d'onde du domaine visible, pour la quasi-totalité de ces toits la maîtrise de ces transmissions passe par le choix des feuilles de verre et d'intercalaires et des couches conférant des propriétés spécifiques.

Ainsi de manière traditionnelle la transmission lumineuse des toits vitrés est inférieure à 50% et souvent bien inférieure, par exemple de l'ordre de 15 à 20% ou moins de la lumière incidente (mesure selon EN 410).

L'utilisation de moyens de commande permettant de faire varier la transmission lumineuse est aussi souvent combinée avec ces moyens traditionnels que sont les feuilles de verre absorbant et les couches modifiant les propriétés. Ces moyens traditionnels peuvent compléter le contrôle des propriétés opto-énergétiques mais aussi éventuellement ajuster les colorations en réflexion ou transmission.

Les toits dont la transmission lumineuse est modifiée par la mise en oeuvre de SPD sont particulièrement intéressants en raison notamment de leur réponse très rapide à la commande. La variation de la transmission lumineuse obtenue avec ces SPD entre les deux états «clair» et «obscur», dépend des systèmes choisis. Dans les produits usuels de ce type, la variation de transmission entre ces deux états peut atteindre 40% ou plus, avec dans l'état obscur une transmission qui peut être extrêmement faible. Par ailleurs la présence de ces systèmes conduit aussi à une transmission énergétique très réduite quel que soit l'état clair ou obscur dans lequel ils sont. Cette réduction de la transmission énergétique est notamment liée aux dispositions prises pour éviter de soumettre les éléments fonctionnels que sont ces particules orientables à une élévation trop forte de la température.

L'utilisation d'un film fonctionnel SPD est l'objet de publications antérieures et notamment WO2005/102688 qui spécifie certaines des conditions de mise en oeuvre.

Le choix des films SPD et les conditions électriques de commande permettent aussi le cas échéant de fixer l'importance de la variation de transmission lumineuse. Dans les applications aux toits, selon l'invention pour l'état obscur une transmission aussi faible que possible est recherchée, notamment inférieure à 3%, de préférence inférieure à 2%, et de façon particulièrement préférée inférieure à 1%. Une telle transmission peut être obtenue avec les films SPD disponibles dans le commerce, même quand le film est de très faible épaisseur. Pour répondre aux souhaits des constructeurs, à l'inverse la transmission à l'état clair est de préférence significative, mais comme pour les toits vitrés sans film SPD, elle est de préférence inférieure à 50%, et même inférieure à 40%, et le plus souvent inférieure à 30%.

Si les écarts entre état clair et obscur peuvent résulter du seul effet du fonctionnement des films SPD, la présence de feuilles de verre et intercalaires colorés complète éventuellement les moyens pour le contrôle de la transmission lumineuse. Les effets combinés permettent le cas échéant à l'état clair, de réduire encore la transmission pour atteindre par exemple moins de 15%. Mais comme indiqué ci-dessus un rôle des feuilles de verre et intercalaires est aussi de contrôler la couleur en transmission et réflexion.

Si la variation de transmission lumineuse est déterminante dans le choix des films SPD, ceux-ci ont un rôle important dans la transmission énergétique des vitrages dans lesquels ils sont incorporés. A l'état obscur la transmission énergétique, indépendamment de la présence de feuilles de verre ou d'intercalaires absorbants, est ordinairement inférieure à 10% et avantageusement inférieure à 5%. L'état obscur est normalement, mais pas exclusivement, celui du véhicule à l'arrêt, une transmission énergétique très réduite est donc particulièrement bienvenue. A l'état clair la transmission énergétique est sensiblement plus importante du fait même que le rayonnement visible s'accompagne aussi d'une transmission énergétique. Le film SPD absorbe néanmoins une part significative de l'énergie. On choisit avantageusement les éléments composant le vitrage, film SPD, feuilles de verre et couches réfléchissant les infrarouges de sorte que la transmission énergétique solaire soit aussi faible que possible. Pour le seul film SPD elle est inférieure à 30% et de préférence inférieure à 25%. Pour le vitrage complet elle est avantageusement inférieure à 20% et de préférence inférieure à 15%.

Les toits selon l'invention qui satisfont aux conditions indiquées ci-dessus, doivent encore répondre à des exigences en ce qui concerne l'importance de la réflexion, et des couleurs en réflexion et transmission.

Pour des raisons non seulement d'esthétique, mais aussi de sécurité, les toits ne doivent pas présenter une réflexion excessive dans le domaine visible que ce soit à l'état clair ou à l'état obscur. Elle est de préférence inférieure à 20%, avantageusement inférieure à 15%, et de façon particulièrement préférée inférieure à 10%.

Les constructeurs pour des raisons d'esthétique cette fois, demandent aussi que la réflexion soit relativement neutre, autrement dit que la couleur apparente des toits ne soit pas trop accentuée. En particulier les teintes pourpres doivent être évitées. Des nuances bleutées peuvent s'harmoniser avec les teintes les plus répandues pour les véhicules.

Selon les données colorimétriques CIELab (illuminant D 65 sous 10°), la couleur en réflexion, à l'état obscur comme à l'état clair, est de préférence dans les limites suivantes :

$$- 8 < a* < 3 \quad \text{et de préférence} \quad - 7 < a* < 2$$

$$- 7 < b* < 3 \quad \text{et de préférence} \quad - 2 < b* < 1$$

La couleur en transmission doit être aussi maîtrisée, essentiellement à l'état clair. A l'état obscur, la transmission étant très réduite la couleur est peu sensible. La transmission à l'état clair est de préférence :

$$- 10 < a* < 0 \quad \text{et de préférence} \quad - 8 < a* < 0$$

$$- 2 < b* < 14 \quad \text{et de préférence} \quad - 0 < b* < 10$$

L'utilisation des films SPD est sujette à quelques exigences en dehors de celles concernant leurs performances sur la modification de la transmission lumineuse. Il convient tout d'abord de protéger le film fonctionnel mécaniquement et chimiquement mais aussi thermiquement.

Dans les films SPD les particules orientables qui sont incorporées dans une matrice polymère peuvent être altérées par une élévation excessive de la température. Dans une moindre mesure les films peuvent voir leur propriétés modifiées irréversiblement s'ils sont exposés à des froids trop intenses, par exemple de - 40°C. L'exposition aux variations externes de température est accentuée par la position envisagée selon l'invention. Le rayonnement solaire, et en particulier les rayons infrarouges, peuvent conduire à une forte élévation de température du toit.

Pour prévenir la dégradation du film, il est prévu, notamment dans le texte précité, de disposer un filtre infrarouge pour protéger le film SPD.

Il est aussi souhaitable de protéger le SPD contre les ultraviolets. Les matériaux utilisés pour constituer les feuilletés et encapsuler les cellules sont ordinairement des produits qui par eux-mêmes sont des écrans aux UV. C'est le cas en particulier des matériaux tels que les polyvinyl-butyrals (PVB) ou les polymères d'éthylène-vinyl-acétate (EVA), présentés antérieurement pour réaliser les structures feuilletées de ces toits. La présence de tels composés constitue un filtre aux UV pratiquement complet. Il n'est donc pas nécessaire de prévoir des éléments supplémentaires.

Le film de contrôle de la transmission lumineuse est nécessairement alimenté électriquement. Son raccordement au système général d'alimentation électrique du véhicule se fait nécessairement à partir des bords du vitrage. Les conduites électriques de connexion ne sont pas normalement transparentes. Pour ne pas rompre la transparence même limitée du vitrage, on s'efforce de dissimuler ces conduites dans les zones périphériques du vitrage, lesquelles comportent normalement des parties émaillées opaques destinées notamment à masquer les marques de collage irrégulières.

La présence d'un toit vitré modifie les conditions de confort thermique pour les occupants du véhicule. Si l'échauffement lorsque le véhicule est exposé au soleil conduit aux conditions exposées ci-dessus pour réduire le plus possible la transmission énergétique, pour les passagers la présence de toits vitrés peut aussi conduire à ce qui est qualifié de sensation «d'épaule froide», sensation causée par une déperdition de chaleur depuis l'habitacle lorsque la température extérieure est inférieure aux températures ambiantes de confort.

Dans la pratique pour restaurer le confort des passagers les constructeurs utilisent essentiellement un vélum qui permet de couvrir de l'intérieur le vitrage sur toute sa surface. La présence d'un vélum et des éléments qui lui sont associés, notamment pour son déploiement motorisé, est coûteuse et amène une surcharge du véhicule.

Pour éviter l'usage du vélum l'invention propose des toits pour lesquels la déperdition de chaleur est minimisée. Pour parvenir à ce résultat, l'invention propose l'application de couches low-e (couche basse-émissive) sur la face du vitrage tournée vers l'habitacle. Dans la désignation traditionnelle des faces des vitrages feuilletés il s'agit de la position 4. La numérotation des faces se fait en partant de la face exposée à l'atmosphère externe. Les couches en question font office de filtre réfléchissant sélectivement les rayons infrarouge émis depuis l'habitacle, sans constituer un obstacle important à la transmission des rayons du domaine visible de l'extérieur vers l'intérieur.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

Avantageusement, compte tenu de l'importance de disposer de revêtements de bonne résistance mécanique, on choisit des couches dites «dures», telles que celles produites par des techniques de type pyrolytique, CVD ou PECVD. Mais des systèmes low-e peuvent aussi être préparés par les techniques de pulvérisation cathodique sous vide, à condition que ces systèmes soient composés de couches suffisamment résistantes.

Selon l'invention il est préféré d'utiliser un système de couches basse-émissives, dont l'émissivité est inférieure à 0,3 et de préférence inférieure à 0,2, et de façon particulièrement préférée inférieure à 0,1.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Selon l'invention, la couche en contact avec le verre est une couche d'oxy-carbure de silicium. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

Tous les éléments qui composent les toits selon l'invention participent à des degrés divers à la formation des propriétés recherchées. En particulier les feuilles de verre et les feuilles de matériau intercalaire peuvent moduler les transmissions et la réflexion lumineuse et énergétique.

Les feuilles de verre utilisés pour constituer le vitrage feuilleté peuvent être de même composition et éventuellement de même épaisseur, ce qui peut rendre la mise en forme préalable plus facile, les deux feuilles étant par exemple bombées simultanément. Le plus souvent les feuilles sont de composition et/ou d'épaisseur différentes et dans ce cas, elles sont mises en forme de préférence séparément.

Le choix des feuilles de verre est de préférence tel que la lumière transmise comme la lumière réfléchie soit de couleur aussi neutre que possible. Globalement le vitrage présente une coloration grise ou légèrement bleutée.

La présence éventuelle d'intercalaires de couleur participe à l'absorption lumineuse. Leur utilisation peut être envisagée pour se substituer en partie au moins à la contribution des feuilles de verre dans l'établissement en particulier de la couleur. Cette situation peut se rencontrer, par exemple, lorsque pour intégrer dans le vitrage des éléments photovoltaïques, au moins la feuille de verre externe peut être une feuille de verre peu absorbante, voire de verre extra-clair. Hors cette hypothèse, le plus souvent la feuille externe est une feuille de verre également absorbante, et le recours à un intercalaire coloré n'est pas nécessaire.

La feuille de verre tournée vers l'habitacle peut aussi être exceptionnellement de verre clair. Elle est le plus souvent absorbante et contribue à la réduction de la transmission énergétique globale. Lorsque sa transmission est limitée, elle permet de masquer à la vue des passagers, au moins en partie, les éléments non transparents présents dans le vitrage.

Dans le choix des feuilles de verre et des intercalaires intervient aussi la couleur en transmission et en réflexion.

Dans les toits selon l'invention qui comportent des moyens pour faire varier la transmission de manière commandée, l'absorption par les feuilles de verre, et éventuellement par les intercalaires, peut être très réduite. Elle permet comme indiqué précédemment de moduler principalement la transmission lorsque le film SPD est à l'état clair.

L'absorption intrinsèque due aux feuilles de verre et aux intercalaires peut être significative. Elle est de préférence d'au moins 20% et peut s'élever à 40% ou plus. L'absorption en question intervient que le dispositif soit à l'état clair ou obscur. A l'état clair il contribue à la réduction de la transmission lumineuse et énergétique et participe éventuellement au masquage des éléments contenus dans le vitrage.

Dans la préparation des toits selon l'invention de manière générale il convient de considérer les capacités des éléments constitutifs à supporter les traitements qui conduisent à la mise en forme et à l'assemblage du vitrage. Les toits des véhicules présentent en général des courbures relativement peu accentuées à l'exception éventuellement de celles des bords de ces vitrages. La mise en forme de feuilles de verre minéral comporte, au moins pour l'une d'entre elles et le plus souvent pour les deux, un traitement qui nécessite un passage à haute température (650-700°C) conduisant à un ramollissement du verre.

Une alternative consiste à procéder à la formation d'un vitrage feuilleté associant une feuille bombée relativement épaisse à une feuille plane de moindre épaisseur qui est mécaniquement forcée pour épouser la courbure de la feuille épaisse. La mise en oeuvre de cette technique n'est envisagée que dans l'hypothèse où les courbures imposées restent relativement modestes compte tenu des contraintes supportables notamment par les feuilles de verre. Ce type d'assemblage est par exemple tel que décrit dans la demande BE20110415 (déposée le 4/7/2011) ou encore dans la demande BE20120036 (déposée le 16/1/2012). Dans le cas de ce type d'assemblage le système de couches même relativement fragile, s'il est placé sur la feuille plane, n'est exposé qu'à la température de passage à l'étuve qui conclut l'assemblage du feuilleté.

Pour ce mode d'assemblage la feuille de verre plane est avantageusement une feuille de verre trempé chimiquement.

L'insertion du film SPD est de préférence facilitée par la mise en place d'un logement aménagé dans la ou les feuilles intercalaires. Ce mode est proposé dans WO 2005/102688.

Disposer sur un véhicule d'un toit vitré vise au moins en partie un objectif de nature esthétique autant que fonctionnelle. Pour cette raison il est préférable que tous les moyens associés à ces toits contribuent à la réalisation de cet objectif.

La commande du SPD peut comprendre de simples interrupteurs. Si l'on souhaite disposer un interrupteur sur le toit vitré lui-même, il est souhaitable qu'il ne fasse pas obstacle à la transparence à l'origine du choix des toits vitrés.

L'invention propose d'utiliser des moyens de commande du SPD qui soient également essentiellement transparents. A cet effet l'invention propose d'utiliser des interrupteurs dont la mise en oeuvre est déclenchée par l'intermédiaire de relais actionnés par une impulsion liée à une grandeur électrique. De préférence l'interrupteur utilisé est du type capacitif. Ce mode est celui qui permet d'utiliser au mieux la structure même des éléments inclus dans le toit.

A titre indicatif un capteur capacitif peut être du type à contact direct. L'élément sensible est par exemple une zone délimitée dans la couche low-e située sur la face tournée vers l'habitacle. Les couches low-e étant conductrices peuvent servir de capteur pour la commande du relais d'interruption. L'avantage du contact direct est que la modification de capacité induite par contact peut être relativement importante de sorte que le seuil commandant l'interrupteur peut être suffisamment élevé pour écarter tout déclenchement parasite.

Il convient notamment dans le réglage de la sensibilité de faire en sorte que le seuil de déclenchement soit supérieur à celui qui correspond par exemple à la présence d'eau sur la feuille de verre extérieure. Une couche interposée permet d'éviter les effets parasites. Les électrodes du film SPD constituent de fait un écran contre les influences provenant de l'extérieur.

L'invention est décrite de manière détaillée en se référant aux exemples illustrés par les planches de dessins dans lesquelles :

- la figure 1 présente en perspective éclatée, des éléments d'un vitrage selon l'invention ;

- la figure 2 présente de manière schématique les éléments de la figure 1 après assemblage

- la figure 3 montre un détail du film SPD de la figure 1 ;

- la figure 4 montre de manière schématique des éléments de protection d'un ensemble SPD ;

- la figure 5 présente de façon schématique l'assemblage de la figure 2 complétée.

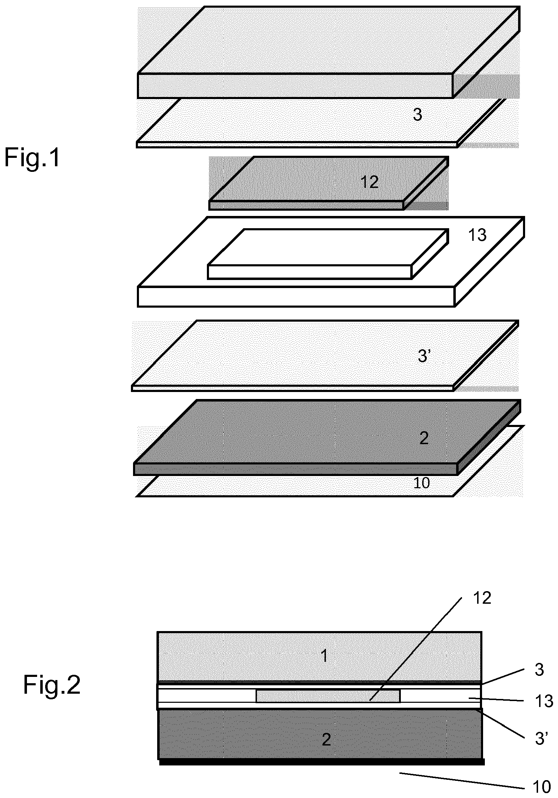

L'ensemble des éléments de la figure 1 est un exemple de réalisation selon l'invention. Les éléments sont présentés tels qu'avant leur assemblage. La figure 2 reprend en coupe la structure correspondant aux éléments de la figure 1 après assemblage.

La figure 1 ne montre pas les courbures des feuilles par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Le vitrage de la figure 1 comprend deux feuilles de verre, externe 1, et interne 2. Le plus fréquemment ces deux feuilles sont de verre coloré fortement absorbant, de telle sorte que la transmission lumineuse soit limitée par le seul effet de ces deux feuilles par exemple à moins de 50%, et dans une configuration de ce type de préférence à moins de 30%

Des verres utilisés pour ces feuilles sont par exemple les verres gris tels que décrits dans le brevet FR2738238 ou dans le brevet EP1680371, ou des verres gris à nuance verte tel que décrits dans EP 887320, ou à nuance bleu comme dans EP1140718.

Les feuilles de verre 1 et 2 sont, dans un exemple, respectivement de 1,6mm et 2,6mm d'épaisseur. La feuille 1 est d'un verre vert dont les caractéristiques optiques sont sous 4mm d'épaisseur et un illuminant A:

TL A4 27,3% ; TE4 14,8 % ; $\lambda_D$ 486nm ; P 18

($\lambda_D$ est la longueur d'onde dominante et P est la pureté d'excitation).

La feuille 2 est de verre gris dont les caractéristiques sont :
TL A4 17% ; TE4 15 % ; $\lambda_D$ 490nm ; P 1,8

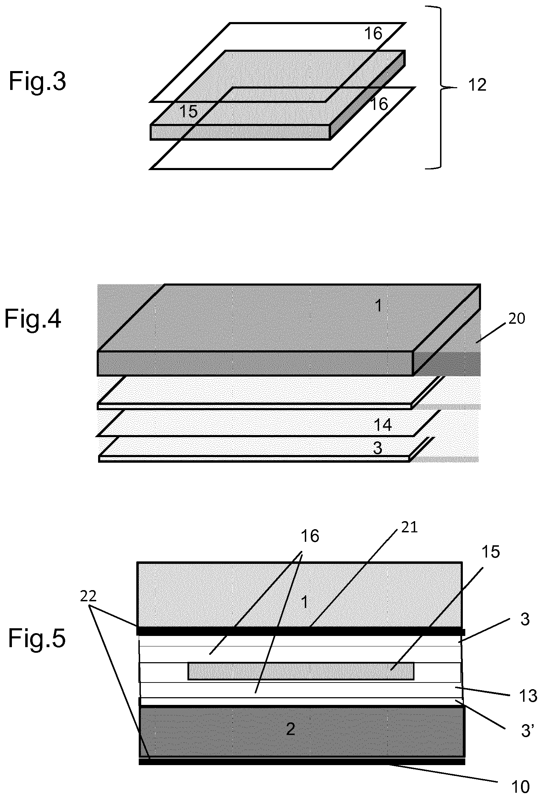

A la figure 1, les feuilles de verre sont présentées sans les motifs émaillés qui traditionnellement sont utilisés pour masquer les bords des vitrages. Des émaux de ce type seraient par exemple disposés sur la face interne de la feuille 1, donc en position 2, dissimulant l'ensemble des collages et connexions localisés au bord du vitrage. Les émaux de masquage peuvent aussi être en position 4, autrement dit sur la face du vitrage exposée à l'intérieur de l'habitacle. Mais dans cette position, pour une observation de l'extérieur du véhicule, ils ne masquent pas les éléments inclus dans le feuilleté. Il est aussi possible de disposer les masquages en position 2 et en position 4 comme illustré à la figure 5.

Des feuilles intercalaires de matériau thermoplastique (3, 3' et 13) sont disposées entre les feuilles de verre pour assurer l'assemblage du feuilleté.

Le film SPD est représenté schématiquement en 12. Il ne couvre pas la totalité du vitrage. Les bords du film SPD ne doivent pas entrer contact avec l'atmosphère extérieure, en particulier pour protéger les particules actives de l'humidité. Pour prévenir tout contact avec l'atmosphère, le film SPD 12 est entièrement enveloppé dans les différentes feuilles de matériau intercalaire. Pour envelopper le film 12 à sa périphérie, la feuille intercalaire 13 d'épaisseur voisine de celle du film SPD comporte avantageusement une découpe appropriée dans laquelle le film vient se loger.

La figure 1 montre la feuille 13 constituée d'une seule pièce dans laquelle un évidement est aménagé. Il est possible de remplacer cette pièce unique par un ensemble de bandes juxtaposées entourant le film 12, ces pièces fusionnant lors de l'étuvage.

La présence de la feuille 13 isole le film SPD et simultanément assure une répartition uniforme de la pression exercée sur les constituants du vitrage lors de son assemblage. La feuille 13 peut être ou non de même nature que les intercalaires 3 et 3'.

Dans un exemple de réalisation, les feuilles sont de PVB de 0,38mm d'épaisseur chacune.

La structure des films de type SPD décrite dans la demande WO2005/102688 est schématisée à la figure 3. Cette structure comporte un élément central 15 constitué d'un polymère contenant les particules orientables sensibles à l'application de la tension électrique. De part et d'autre de cet élément central 15, et s'étendant sur chacune des faces de celui-ci, deux électrodes 16 permettent d'appliquer la tension nécessaire à la commande. De manière connue les électrodes 16 sont avantageusement constituées de feuilles essentiellement transparentes revêtues de couches minces conductrices. Le plus usuellement de feuilles de poly-téréphtalate d'éthylène glycol (PET) de quelques dizaines de microns d'épaisseur qui combinent une bonne transparence à une résistance mécanique élevée. Sur ces feuilles les couches conductrices sont avantageusement du type TCO (thin conductive oxide), tel que les couches d'ITO (indium tin oxide).

Toujours dans un exemple le film SPD est du type LCF-1103HDA commercialisé par la société Hitachi. Le film présente une épaisseur totale incluant les deux électrodes de 0,35mm.

Comme indiqué ci-dessus, les composants des films SPD, et notamment les particules de nature organique, sont sensibles au vieillissement, notamment sous l'effet de la chaleur. Pour leur conférer la longévité souhaitée le film est normalement protégé par des filtres interposés entre la feuille de verre externe 1 exposée au rayonnement solaire, et le film SPD 15.

Des filtres infrarouges sont utilisés dans de nombreuses applications dans les vitrages antisolaires ou dans les vitrages bas-émissifs. Ils sont généralement constitués de couches minces d'oxydes conducteurs, ou mieux, car beaucoup plus performants de couches métalliques suffisamment minces pour être pratiquement transparentes. Dans ces filtres les couches métalliques sont associées à des couches diélectriques également minces et transparentes qui donnent à l'ensemble la sélectivité nécessaire. Le plus souvent pour améliorer cette sélectivité, qui s'accompagne de réflexion que l'on s'efforce de rendre aussi neutre que possible, les filtres comportent une pluralité de couches métalliques lesquelles sont le plus souvent à base d'argent.

Les couches filtrant les infrarouges sont soit appliquées sur la feuille de verre externe soit introduites par le biais d'une feuille polymère intercalaire, notamment du type PET. La figure 4 montre un détail d'un assemblage de ce type dans lequel, sous la feuille de verre externe 1, une feuille 14 portant le filtre infrarouge, est disposée entre deux feuilles 3 et 20 de matériau intercalaire. Dans la mesure où le support des couches de type PET n'est pas lui-même de nature à adhérer au verre, il est nécessaire de l'introduire entre deux feuilles intercalaires thermoplastiques. L'utilisation d'un film support permet de ne pas soumettre les couches fragiles à des températures importantes. Dans ce cas la seule contrainte reste la température imposée par passage à l'étuve au moment de l'assemblage. La contrepartie est le fait de devoir rajouter une feuille intercalaire qui accroît l'épaisseur de l'ensemble.

Selon l'invention il est préféré de procéder avec un système de couches déposé directement sur la feuille de verre externe. Mais comme indiqué, si l'on choisit des filtres très performants, comme ceux comprenant des couches métalliques, ces couches sont appliquées par des techniques de pulvérisation cathodique, techniques opérées sur des feuilles planes. Par suite, cette solution implique que ces couches subissent les traitements thermiques lors de la mise en forme de cette feuille de verre.

Le choix du système de couches est avantageusement celui de systèmes à plusieurs couches d'argent pour obtenir un filtre efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

L'ensemble des composants de la figure 1 comprend encore un système de couches bas-émissif 10 appliqué sur la feuille de verre interne 2, sur la face tournée vers l'habitacle. La présentation de la figure 1, montre ce système détaché pour plus de clarté mais en fait il n'est pas dissociable de la feuille su laquelle il est déposé.

Un exemple de système low-e répondant aux propriétés recherchées est constitué d'une couche d'oxyde d'étain dopé à 2% atomique de fluor, dont l'épaisseur est de 470nm. Cette couche est déposée sur une couche au contact du verre, composée d'oxy-carbure de silicium de 75nm d'épaisseur. Les deux couches sont déposées par CVD. Sur une feuille de verre clair de 4mm d'épaisseur, ce système conduit à une émissivité d'environ 0,1.

D'autre systèmes de couches low-e peuvent être produits par une technique de pulvérisation cathodique tout en conservant une résistance mécanique suffisante. Des systèmes de ce type sont par exemple composés d'oxydes notamment des couches à base d'oxyde de titane en association avec d'autres oxydes métalliques notamment d'oxyde de zirconium. Des couches de ce type sont décrites en particulier dans la demande WO2010/031808.

A titre d'exemple encore un système utilisable comporte une couche d'un alliage de chrome et de zirconium. Pour protéger cette couche métallique déposée par pulvérisation cathodique, elle est prise entre deux couches de nitrure de silicium. Cet ensemble conduit aussi à une émissivité satisfaisante avec une réduction de la transmission lumineuse qui peut atteindre 10%, réduction qui pour l'usage considéré ne constitue pas un inconvénient.

L'utilisation de ces systèmes bas émissifs améliore considérablement le confort dans l'habitacle en période froide et peut rendre superflu l'usage d'un velum.

La figure 5 présente de façon schématique, un vitrage selon l'invention après assemblage de ses différents constituants. Les dimensions ne sont pas présentées de manière à respecter les valeurs relatives. Notamment l'épaisseur du film SPD et des films portant les éléments conducteurs sont très exagérées.

A la figure 5 un système de couches filtrant les infrarouges est représenté en 21. Ce système est directement appliqué sur la feuille de verre 1 sur la face 2. De façon analogue, un système low-e 10 est appliqué sur la feuille de verre 2 sur la face 4.

Des bandes d'émail 22 sont représentées sur les bords du vitrage. Ces bandes émaillées sont appliquées par des techniques de sérigraphie sur les feuilles de verre préalablement recouvertes des couches. Les bandes d'émail sont disposées sur la figure 4 de telle sorte qu'elles couvrent les limites du film SPD 15. Elles dissimulent ces limites aussi bien de l'extérieur que de l'intérieur du véhicule. Elles servent aussi à masquer les connexions électriques non représentées qui alimentent les électrodes du film SPD.

**Revendications**

1. Toit de véhicule automobile vitré et feuilleté à transmission lumineuse variable, offrant un confort thermique amélioré comprenant deux feuilles de verre externe et interne réunies au moyen de feuilles intercalaires thermoplastiques, un ensemble de de régulation de la transmission lumineuse de type film SPD (suspended partilcles device) incorporé dans le feuilleté entre les deux feuilles de verre, et un système de couches basse-émissive disposé en face 4 du vitrage, dans lequel le système de couches basse-émissive comprend au moins une couche d'oxyde d'étain dopé sous laquelle est comprise , une couche à base d'oxy-carbure de silicium.

2. Toit selon la revendication 1 dans lequel le système de couches basse-émissive présente une émissivité qui n'est pas supérieure à 0,3 et de préférence pas supérieure à 0,2, et de façon particulièrement préférée pas supérieure à 0,1.

3. Toit selon les revendications 1 ou 2, dans lequel la couche d'oxyde d'étain est dopé au fluor et présente une épaisseur qui n'est pas inférieure à 200nm.

4. Toit selon l'une des revendications précédentes dans lequel la couche d'oxy-carbure de silicium présente une épaisseur telle qu'elle minimise la réflexion des longueurs d'onde du visible.

5. Toit selon l'une des revendications précédentes comprenant un système de couches réfléchissant sélectivement les infrarouges disposé entre le verre externe et le film SPD.

6. Toit selon la revendication 5 dans lequel le filtre infrarouge est constitué d'un ensemble de couches minces à base d'argent et de couches diélectriques pour améliorer la sélectivité.

7. Toit selon la revendication 6 dans lequel le système de couches comprend au moins trois couches d'argent, séparées les unes des autres par des couches diélectriques.

8. Toit selon l'une des revendications 5 à 7 dans lequel le système de couches réfléchissant sélectivement les infrarouges est appliqué sur la feuille de verre externe, en face 2.

9. Toit selon l'une des revendications précédentes dans lequel les composants sont choisis de sorte que la réflexion lumineuse visible vers l'extérieur, quel que soit l'état clair ou obscur du SPD, ne dépasse pas 20% et, de préférence, pas 15% de la lumière incidente.

10. Toit selon l'une des revendications précédentes dans lequel les composants sont choisis de telle sorte que la transmission énergétique à l'état obscur du SPD, ne soit pas supérieure à 10% et de préférence pas supérieure à 5%.

11. Toit selon l'une des revendications précédente dans lequel la transmission énergétique à l'état clair n'est pas supérieure à 20% et de préférence pas supérieure à 15%.

12. Toit selon l'une des revendications précédentes dans lequel les composants sont choisis de telle sorte qu'à l'état obscur la transmission lumineuse ne soit pas supérieure à 3%, de préférence pas supérieure à 2%, et de façon particulièrement préférée pas supérieure à 1%.

13. Toit selon l'une des revendications précédentes dans lequel les composants sont choisis de telle sorte que à l'état clair, la transmission lumineuse ne soit pas supérieure à 50% et de préférence inférieure à 40%.

14. Toit selon l'une des revendications précédentes dans lequel les feuilles de verre et intercalaires présentent ensemble une absorption d'au moins 20%.

15. Toit selon l'une des revendications précédentes dans lequel les composants sont choisis de telle sorte que, quel que soit l'état clair ou obscur du SPD, la couleur en réflexion définie par les coordonnées colorimétrique CIELab, soit comprise dans les intervalles

$$- 8 < a^* < 3$$

$$- 7 < b^* < 3$$

et de préférence

$$- 7 < a^* < 2$$

$$- 2 < b^* < 1.$$

**Patentansprüche**

1. Laminatglasdach eines Automobilfahrzeugs mit variabler Lichtdurchlässigkeit, welches einen verbesserten Wärmekomfort bietet, umfassend zwei Scheiben eines äußeren und inneren Glases, die durch thermoplastische Zwischenscheiben verbunden sind, eine Einheit zur Regulierung der Lichtdurchlässigkeit des Typs eines SPD-Films (Suspended Particle Device), der in dem Laminat zwischen den beiden Glasscheiben eingeschlossen ist, und ein System von Schichten mit niedrigem Emissionsvermögen, das auf der Fläche 4 der Verglasung angeordnet ist, wobei das System der Schichten mit niedrigem Emissionsvermögen mindestens eine dotierte Zinnoxidschicht umfasst, unter der eine Schicht auf der Basis von Siliciumoxycarbid angeordnet ist.

2. Dach nach Anspruch 1, wobei das System der Schichten mit niedrigem Emissionsvermögen ein Emissionsvermögen aufweist, das nicht höher als 0,3 und vorzugsweise nicht höher als 0,2 und besonders bevorzugt nicht höher als 0,1 ist.

3. Dach nach Anspruch 1 oder 2, wobei die Zinnoxidschicht mit Fluor dotiert ist und eine Dicke aufweist, die nicht kleiner ist als 200 nm.

4. Dach nach einem der vorhergehenden Ansprüche, wobei die Siliciumoxycarbidschicht eine derartige Dicke aufweist, dass sie die Reflexion sichtbarer Wellenlängen minimiert.

5. Dach nach einem der vorhergehenden Ansprüche, umfassend ein System von selektiv Infrarot reflektierenden Schichten, das zwischen dem äußeren Glas und dem SPD-Film angeordnet ist.

6. Dach nach Anspruch 5, wobei der Infrarotfilter aus einer Einheit dünner Schichten auf der Basis von Silber und dielektrischer Schichten zur Verbesserung der Selektivität besteht.

7. Dach nach Anspruch 6, wobei das System der Schichten mindestens drei Schichten aus Silber umfasst, die voneinander durch die dielektrischen Schichten getrennt sind.

8. Dach nach einem der Ansprüche 5 bis 7, wobei das System der selektiv Infrarot reflektierenden Schichten auf der äußeren Glasscheibe auf der Fläche 2 aufgebracht ist.

9. Dach nach einem der vorhergehenden Ansprüche, wobei die Komponenten derart ausgewählt sind, dass die sichtbare Lichtreflexion nach außen, ungeachtet des durchsichtigen oder undurchsichtigen Zustands des SPD, 20 % und vorzugsweise 15 % des einfallenden Lichts nicht überschreitet.

10. Dach nach einem der vorhergehenden Ansprüche, wobei die Komponenten derart ausgewählt sind, dass die Energieübertragung im undurchsichtigen Zustand des SPD nicht größer als 10 % und vorzugsweise nicht größer als 5 % ist.

11. Dach nach einem der vorhergehenden Ansprüche, wobei die Energieübertragung im durchsichtigen Zustand nicht größer als 20 % und vorzugsweise nicht größer als 15 % ist.

**12.** Dach nach einem der vorhergehenden Ansprüche, wobei die Komponenten derart ausgewählt sind, dass im undurchsichtigen Zustand die Lichtdurchlässigkeit nicht größer als 3 %, vorzugsweise nicht größer als 2 % und besonders bevorzugt nicht größer als 1 % ist.

**13.** Dach nach einem der vorhergehenden Ansprüche, wobei die Komponenten derart ausgewählt sind, dass im durchsichtigen Zustand die Lichtdurchlässigkeit nicht größer als 50 % und vorzugsweise kleiner als 40 % ist.

**14.** Dach nach einem der vorhergehenden Ansprüche, wobei die dazwischenliegenden Glasscheiben gemeinsam eine Absorption von mindestens 20 % aufweisen.

**15.** Dach nach einem der vorhergehenden Ansprüche, wobei die Komponenten derart ausgewählt sind, dass, ungeachtet des durchsichtigen oder undurchsichtigen Zustands des SPD, die Reflexionsfarbe, definiert durch kolorimetrische Koordinaten CIELab, in den Intervallen liegt:

$$- 8 < a* < 3$$

$$- 7 < b* < 3$$

und vorzugsweise

$$- 7 < a* < 2$$

$$- 2 < b* < 1.$$

## Claims

**1.** Laminated and glazed automotive vehicle roof having variable light transmission and offering improved thermal comfort, comprising two glass sheets, an external glass sheet and an internal glass sheet, that are joined by means of thermoplastic interlayer sheets, an assembly, of the SPD (suspended particle device) film type, for regulating light transmission, which is incorporated into the laminate between the two glass sheets, and a system of low-emissivity layers placed on face 4 of the glazing unit, in which the system of low-emissivity layers comprises at least one layer of doped tin oxide under which a layer based on silicon oxycarbide is comprised.

**2.** Roof according to Claim 1, in which the system of low-emissivity layers has an emissivity that is no higher than 0.3 and preferably no higher than 0.2 and in a particularly preferred way no higher than 0.1.

**3.** Roof according to Claims 1 or 2, in which the layer of tin oxide is doped with fluorine and has a thickness that is no smaller than 200 nm.

**4.** Roof according to one of the preceding claims, in which the layer of silicon oxycarbide has a thickness such that it minimizes reflection of wavelengths in the visible.

**5.** Roof according to one of the preceding claims, comprising a system of layers selectively reflecting the infrared, said system being placed between the external glass and the SPD film.

**6.** Roof according to Claim 5, in which the infrared filter consists of an assembly of thin silver-based layers and dielectric layers to improve selectivity.

**7.** Roof according to Claim 6, in which the system of layers comprises at least three silver layers separated from one another by dielectric layers.

**8.** Roof according to one of Claims 5 to 7, in which the system of layers selectively reflecting the infrared is applied to the external glass sheet, on face 2.

9. Roof according to one of the preceding claims, in which the components are chosen so that visible light reflection toward the exterior, irrespectively of whether the SPD is in its clear or dark state, does not exceed 20% and, preferably, does not exceed 15% of the incident light.

10. Roof according to one of the preceding claims, in which the components are chosen such that the energy transmission when the SPD is in its dark state is no higher than 10% and preferably no higher than 5%.

11. Roof according to one of the preceding claims, in which the energy transmission in the clear state is no higher than 20% and preferably no higher than 15%.

12. Roof according to one of the preceding claims, in which the components are chosen such that, in the dark state, the light transmission is no higher than 3%, preferably no higher than 2% and in a particularly preferred way no higher than 1%.

13. Roof according to one of the preceding claims, in which the components are chosen such that, in the clear state, the light transmission is no higher than 50% and preferably lower than 40%.

14. Roof according to one of the preceding claims, in which the glass sheets and interlayers together have an absorption of at least 20%.

15. Roof according to one of the preceding claims, in which the components are chosen such that, irrespectively of whether the SPD is in its clear or dark state, the color in reflection, defined by CIE Lab color coordinates, is comprised in the intervals:

– $8<a*<3$

– $7<b*<3$ and preferably

– $7<a*<2$

– $2<b*<1.$

Fig.1

3

12

13

3'

2

10

Fig.2

12

1

3

13

3'

2

10

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1200256 A
- EP 1171294 A
- WO 2005102688 A
- BE 20110415
- BE 20120036
- FR 2738238
- EP 1680371 A
- EP 887320 A
- EP 1140718 A
- WO 2011147875 A
- WO 2010031808 A